Europäisches Patentamt

European Patent Office

Office européen des brevets

(19)

(11) Veröffentlichungsnumr    0 040 304

A2

# (12) EUROPÄISCHE PATENTANMELDUNG

(21) Anmeldenummer: 81102005.6

(22) Anmeldetag: 18.03.81

(51) Int. Cl.³: F 03 B 17/00
F 03 G 7/00

(30) Priorität: 18.03.80 CH 2101/80

(43) Veröffentlichungstag der Anmeldung:
25.11.81 Patentblatt 81/47

(84) Benannte Vertragsstaaten:
AT BE CH DE FR GB IT LI LU NL SE

(71) Anmelder: Birrer, Niklaus
Dagmersellen-Letten
CH-6235 Post Winikon.LU(CH)

(72) Erfinder: Birrer, Niklaus
Dagmersellen-Letten
CH-6235 Post Winikon.LU(CH)

(54) Technische Krafterregeranlage für Direktantriebskraft-Erzeugung und für elektrische Energie-Erzeugung.

(57) Mit dieser Anlage wird Anziehungskraft und Schwerkraft der Erdmaterie, Ebbe, Flut, Druck und Vakumzustand gemeinsam für Energieerzeugung genutzt, mittels Behältersystem (1) welches mit einem teilbaren Medium, oder Pressluft teilweise oder voll eingefüllt wird, offen oder hermetisch abgeschlossen benützt werden kann. Diese Füllung oder Druck wird auf fliebare abgedichtete Schiebekolbenplattform oder Drehkolbenplattform (2) abgestützt. Durch laufende wechselwirkende Umschaltungen des Absperrschieber (6) und Umschalthahn (7) wird mittels Rücklaufdosierpumpe (5) und Rücklaufleitung (4) die Mediumfüllung in den dauernden wechselwirkenden Kreisumlauf geführt, Schiebekolbenplattform (2) von A zu B und von B zu A in Bewegung gesetzt. Diese Krafterregung wird über Uebertragungsachse (8) an Umsetzgetriebe (9) mittels Schwungmasse an Direktantriebsobjekt oder an Stromgenerator (10) übertragen. Für zusätzliche Krafterzeugung wird die hermetisch abgeschlossene Mediumfüllung mittels Druckdosierpumpe komprimiert (11) Anlage vergrössert, Schwungmasse eingebaut, zusätzliche herkömmliche Turbine indessen Rücklaufleitung (4) oder in Ablaufleitung (4b) eingebaut. Mit automatischen Steuerungsblock und Absicherungsblock (12) bestückt in Betrieb gehalten. Die Anlage kann ebenfalls an fliessende Quelle, Bach, Fluss, Strom, Speicherbecken und an Stausee (1a) durchfliessend angeschlossen, oder in dessen bestehenden Leitungssystem mit vorhandenen Kraftturbine vor oder nachgeschaltet eingebaut werden, während diese Mediumfüllung nicht mehr in den Kreislauf der Anlage, sondern in Abflussleitung (4b) geführt wird.

./...

EP 0 040 304 A2

Blatt 2.

Fig. 4.

Technische Krafterregeranlage für Direktantriebskraft- Erzeugung und für elektrische Energie-Erzeugung.


Gegenstand der vorliegenden Erfindung ist eine neue anwendbare
Technologie, ausgebildet als technische Krafterregeranlage
für Direktantriebskrafterzeugung und für elektrische Energie-
Erzeugung, wodurch die Anziehungskraft und Schwerkraft der
Erdmaterien, sowie Flut und Ebbe, und den erzeugbaren
Atmosphärendruck und Vakumzustand gemeinsam für die Erzeugung
von Energie nutzbar gemacht werden kann,welches mittels einem
Behältersystem aus Metall oder Kunststoff, einer teilbaren
Mediumfüllung wie z.B. Wasser,Oel,Emulsion oder Pressluft,
Hohlzylinder,Schiebekolbenplattform, oder Drehkolbenplattform,
Umschaltabsperrschieber, Umschaltkugelhahn,Rücklaufdosierpumpe
Rücklaufleitung,Druckdosierpumpe oder Kompressor, Uebertragungachse, Umsetzgetriebe, Schwungmasse, Stromgenerator, automatischen
Steuerblock und Absicherungsblock erreicht wird. Die Anlage
wird in offenen oder geschlossenen Zustand für Kreislauf-
Umwälzung ohne stetigen Zufluss, oder an fliessende Quelle,
Bach, Fluss, Strom,Speicherbecken oder an Stausee stetig
durchfliessend angeschlossen, ohne dass das Medium in den
Kreislauf zurück geführt wird, sondern durch Abflussleitung
abgeleitet wird.


Bis anhin war Direktantriebskraft-Erzeugung und elektrische
Energie-Erzeugung nur unter Verbrauch und Vernichtung von
Rohstoffen, wie z.B. Holz,Kohle,Oel, Uran, oder durch
Naturelemente, wie Wasser,Wind,Erdgas,Erdwärme, und Sonne
möglich.


Diese bisherigen Energieerzeugungen weisen die Nachteile auf,
dass die technischen Anlagen, wie z.B. thermische Werke,
Oelmotoren,Atomkraftwerke, die dazu benötigten Rohstoffe
vernichten, ohne diese wieder regenerieren zu können, dadurch
müssen immer neue Rohstoffe, geschürft, transportiert und gelagert werden, dadurch die Rohstoffe immer knapper, und die Umwelt wie z.B. Luft und Wasser immer mehr schädlich belastet werden.Die Naturelementennutzung in herkömmlichen Sinn, wie z.B. durch Wasserkraftwerke,Windmühlen,Gaswerkeanlagen Erdwärmeanlagen,Sonnenenergieanlagen und Atomkraftwerke haben die Nachteile, aufwendig in Kapital und Platzbedarf zu sein, standortgebunden, daher beschränkt nutzbar, ebenfalls dadurch, dass die Regenerierung nicht immer auf den Bedarfzeitpunkt erfolgen kann.

Die vorliegende Erfindung bezweckt, mittels dieser technischen Krafterregeranlage als ergänzende Alternative zu der herkömmlichen Energieerzeugung einen umweltfreundlichen Beitrag zu leisten um damit saubere,günstige, an Ort und Stelle sofort regenerierbare unversiegbare direkte Antriebskraft und elektrische Energie zu erzeugen, ohne die dazu nötigen Rohstoffe zu vernichten, ohne auf umständliche aufwendige Regenerierung zu warten, ohne grosse Transportvolumen zu bewältigen,ohne grosse Lagervorräte zu unterhalten, und ohne die Umwelt schädigend zu belasten.

Erfindungsgemäss wird dies durch Ausbildung einer technischen Krafterregeranlage erreicht, indem der Innenraum des Rohrleitungssystem,Kanalsystem,Behältersystem aus Metall oder Kunststoff mit einem teilbaren Medium, wie z.B. Wasser,Oel,Emulsion, oder Pressluft teilweise oder voll, separat oder gemischt eingefüllt wird, dessen ganze Flut und Druck auf abgedichtete, fliehbare Schiebekolbenplattform oder Drehkolbenplattform geleitet und abgestützt wird, welche in Hohlzylinder und an Druckrad geführt sind. Durch stetig automatische Umschaltungen des Absperrschieber und Umschaltkugelhahn wird mittels Rücklaufdosierpumpe und Rücklaufleitung die jeweilige wechselwirkende Kreislaufrichtung innerhalb der Anlage erwirkt, wodurch die Abstellplattform in wechselwirkende Schubbewegungen gezwungen wird, und dadurch die Erregerkraft erwirkt, welche durch Uebertragungsachse an Umsetzgetriebe direkt an Antriebsobjekt oder an Stromgenerator übertragen wird.

Durch grössere Dimension der technischen Anlage, und durch Druckzugabe in das Behältersystem mittels Kompressor oder Druckdosierpumpe und durch Einbau von Schwungmasse und zusätzlicher Kraftturbine wird die Krafterzeugung wesentlich erhöht. Die Anlage wird für Teilzeit und für Dauerbetrieb mit vollautomatischen Steuerblock und mit Absicherungsblock ausgerüstet. Die zu verwendenden Bestandteile und Bestückungskörper werden speziell hergestellt, oder aus dem Markt bezogen, verschweisst und verschraubt eingebaut.

Auf zwei beiliegenden Zeichnungsblätter sind vier als Beispiel dienende Ausführungsformen als Erfindung der technischen Krafterregeranlage dargestellt, und zeigen folgend in Frontansicht.

Fig. 1 Technische Krafterregeranlage mit Schiebekolbenplattform
Fig. 2 Technische Krafterregeranlage mit Schiebekolbenplattform
Fig. 3 Technische Krafterregeranlage mit Drehkolbenplattform
Fig. 4 Technische Krafterregeranlage mit Drehkolbenplattform

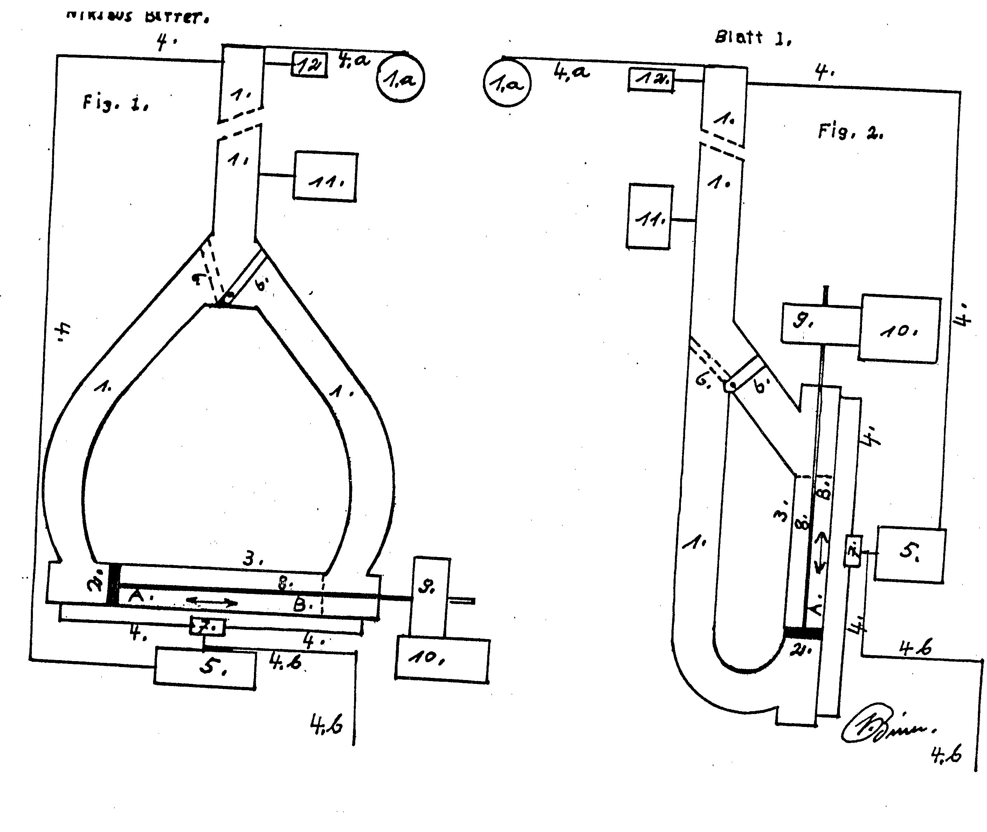

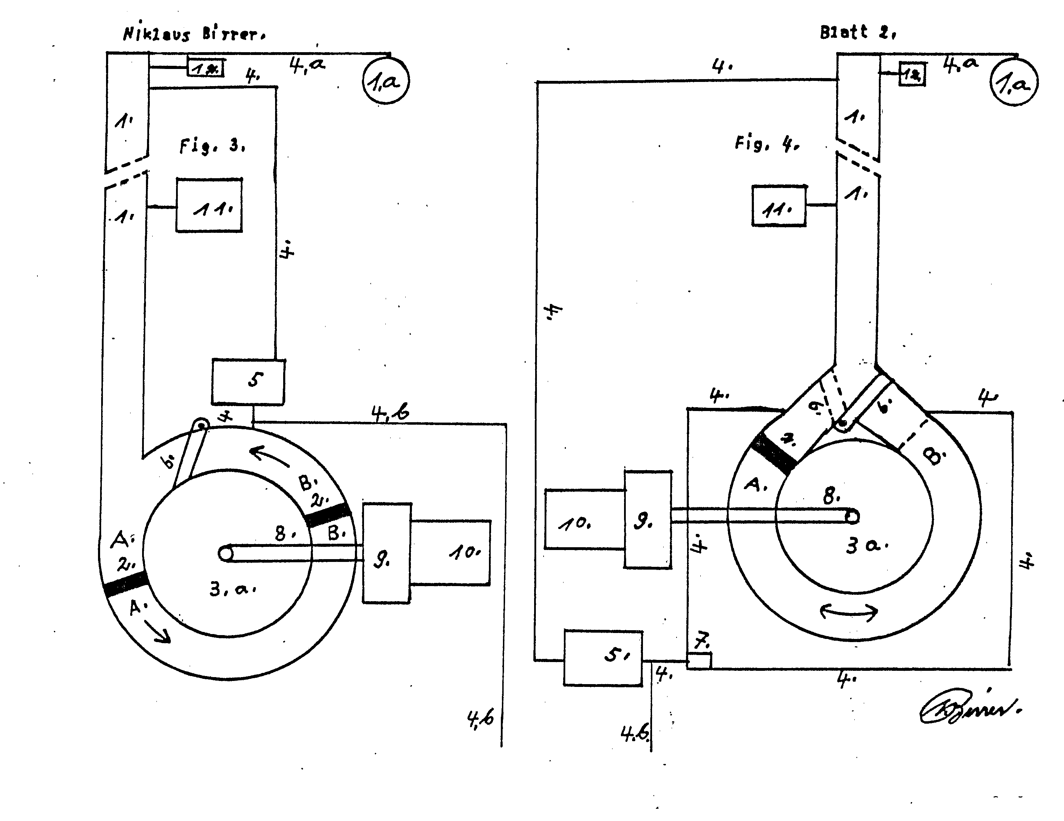

In den vorstehenden Figuren ist technische Krafterregeranlage für Direktantriebskraft-Erzeugung und für elektrische Energie-Erzeugung dargestellt, welche ein Rohrleitungssystem, (1) Kanalsystem, oder Behältersystem aufweist, worin ein teilbares Medium, wie z.B.Wasser,Oel,Emulsion oder Pressluft voll oder teilweise,separat oder gemischt eingefüllt wird. Diese Anlage wird je nach Bedürfnis, offen oder hermetisch abgeschlossen in Rück und Kreislaufzirkulation innerhalb der Anlage betrieben. Die Füllung der hermetisch abgeschlossenen technischen Anlage wird mittels Kompressor oder Druckdosierpumpe (11) nach Bedarf komprimiert um zusätzliche Kraft erzeugen zu können. Das Behältersystem (1) weist innen keine Verengungen auf, damit wird es möglich, die ganze Mediumflut und der volle Druck,des ganzen Querschnittes und Längsschnittes voll auf die fliehbaren abgedichteten Abstellplattform (2) an Schiebekolben und an Drehkolben, welche in Zylinder (3) und an Druckrad (3a) geführt sind ab zu setzen. Durch dauernd wiederholte Umschaltungen des Absperrschieber (6) und des Umschaltkugelhahn (7) wird durch Rücklaufdosierpumpe (5) und Rücklaufleitung (4) der Kreislauf des Mediuminhaltes in die jeweilige wechselwirkende Richtung umgeleitet, wodurch mittels fliehbaren Plattform (2) die laufende Regenerierung der Krafterzeugung, und die Zustände Anziehungskraft,Schwerkraft, Flut und Ebbe, Druck und Vakumzustand erwirkt werden. Durch dessen wechselwirkenden Kreislauf werden Schiebekolbenplattform und Drehkolbenplattform (2) bei Fig. 1 hin und her,bei Fig. 2 auf und ab, bei Fig. 3 achsial in Gegenuhrzeigerrichtung, und bei Fig. 4 pendelförmig in Uhrzeigerrichtung und in Gegenuhrzeigerrichtung von A zu B und von B zu A gedrückt und geschoben, und ein Kraftüberschuss erwirtschaftet, gegenüber des fortlaufenden Kraftaufwand für die Rückführung des Mediuminhaltes in die Kreislaufumwälzung innerhalb der Anlage. Die erwirtschaftete Krafterzeugung wird durch Uebertragungsachse (8) an Umsetzgetriebe (9) an Direktantriebsobjekt oder an den Stromgenerator (10) übertragen. Durch grössere Dimensionierung der technischen Anlage, und durch Druckzugaben in das hermetisch abgeschlossene Behältersystem (1) und Schwungmasseneinbau wird die Krafterzeugung wesentlich erhöht.Die technische Anlage wird für Teilzeit und für Dauerbetrieb mit vollautomatischen Steuerblock und Absicherungsblock (12) ausgerüstet. Die zu verwendenden Bestandteile und Bestückungskörper (1-12) werden speziell hergestellt oder aus dem Markt bezogen, verschweisst und verschraubt eingebaut. Die technische Krafterregeranlage wird in Ergänzung an fliessende Quelle, Bach,Fluss,Strom,Speicherbecken, und an Stausee (1a) mittels Zulaufleitung (4a) durchfliessend angeschlossen, oder in bestehendes Leitungssystem mit vorhandenen Turbinenanlage vorgeschaltet eingebaut, wodurch sich die Füllung laufend erneuert, und nicht mehr in den Kreislauf der Anlage zurück geführt        sondern in die Abflussleitung (4b) geleitet wird.

Patentansprüche.

1.

Technische Krafterregeranlage für Direktantriebskraft-Erzeugung und für elektrische Energie-Erzeugung, bestehend aus einem senkrecht bis wagrecht angeordneten, festabgestellten oder fest montierten, offen oder hermetisch abgeschlossenen Rohrleitungssystem, Kanalsystem oder Behältersystem (1) aus Metall oder Kunststoff, dadurch gekennzeichnet, dass dieses teilweise oder voll mit einem teilbaren Medium, wie z.B. Wasser, Oel, Emulsion, oder Pressluft eingefüllt wird, dessen Füllung als eine einheitliche Flutkraft und Druckkraft auf die fliehbare, abgedichtete Schiebekolbenplattform oder Drehkolbenplattform (2) geleitet und abgestützt wird, welche bei Fig. 1+2 an Schiebekolben in Hohlzylinder (3) und bei Fig. 3+4 an Drehkolbenrad (3a) angebracht und geführt sind, und durch stetige Umschaltbetätigungen des Umschaltabsperrschieber (6) und des Umschaltkugelhahn (7) und mittels Rücklaufdosierpumpe (5) und Rücklaufleitung (4) die jeweilige wechselwirkende Kreislaufänderung innerhalb der Anlage erwirkt, dadurch die Regenerierung der Krafterregung und Krafterzeugung, aus Schwerkraft, Anziehungskraft, Flut und Ebbe, und durch Druck und Vakumzustand laufend erneuert wird, dessen Erregerkraft und Fliehkraft über Uebertragungsachse (8) an Umsetzgetriebe (9) mittels zusätzlichen Schwungmasse direkt an Antriebsobjekt oder an Stromgenerator (10) übertragen wird, während die Anlage für Teilzeit, und für Dauerbetrieb mit vollautomatischen Steuerblock und Absicherungsblock (12) in Betrieb gehalten wird.

2.

Technische Krafterregeranlage nach Patentanspruch 1 bei Fig. 1 wird die Schiebekolbenplattform (2) hin und her, bei Fig. 2 auf und ab, bei Fig. 3 Drehkolbenplattform (2) achsial in Gegenuhrzeigerrichtung, und bei Fig. 4 achsial in Uhrzeigerrichtung und in Gegenuhrzeigerrichtung von A zu B und von B zu A gedrückt und geschoben.

**0040304**

3.

Technische Krafterregeranlage nach Patentanspruch 2 mittels Zulaufleitung (4a) wird diese Anlage an fliessende Quelle, Bach,Fluss,Strom,Speicherbecken oder Stausee (1a) angeschlossen, oder in bereits bestehendes Rohrleitungssystem mit Turbinenanlage vor oder nachgeschaltet eingebaut, wodurch dessen Füllung laufend und durchfliessend erneuert wird, und nicht mehr indessen Kreislaufumwälzung innerhalb der Anlage zurück geführt, sondern in Abflussleitung (4b) abgeleitet wird.

4.

Technische Krafterregeranlage nach Patentanspruch 3 Das Behältersystem (1) wird mit einem teilbaren Medium wie z.B. Wasser,Oel,Emulsion oder Pressluft, separat oder gemischt eingefüllt, und hermetisch abgeschlossen, mit Kompressor oder Druckdosierpumpe (11) nach Bedarf komprimiert, dadurch die Erregerkraft und Nutzkraft wesentlich erhöht wird.

5.

Technische Krafterregeranlage nach Patentanspruch 4 Das Behältersystem (1) weist innen bei Schiebekolbenplattform und bei Drehkolbenplattform (2) und bei Umschaltabsperrschieber (6) keine Verengungen auf, somit kann der ganze Inhalt den vollen Querschnitt und Längsschnitt für die Krafterzeugung ausnützen, weil damit das ganze Gewicht und der vollen Druck auf die fliehbaren abgedichteten Plattform (2) abgestellt werden kann.

6.

Technische Krafterregeranlage nach Patentanspruch 5 In Rücklaufleitung (4) oder in Auslaufleitung (4b) wird für zusätzliche Kraftausbeutung eine Kraftturbine im herkömmlichen Sinn eingebaut.

7.

Technische Krafterregeranlage nach Patentanspruch 6 Diese technische Anlage wird für Teilzeit und für Dauerbetrieb mittels Steuerblock elektronisch und vollautomatisch und Absicherungsblock (12) aus Messuhren, Schaltelemente und Ventilen bestückt betrieben.

0040304

8.

Technische Krafterregeranlage nach Patentanspruch 7. Die Dimension der Anlage wird den Bedürfnissen angepasst gewählt, durch Vergrösserung des Querschnittes und Längsschnittes des Behältersystem (1) wird die Flutfüllung und Druckfüllung grösser, und damit die Krafterzeugung gesteigert.

9.

Technische Krafterregeranlage nach Patentanspruch 8 Die nötigen Anlagebestückungen wie z.B. (1-12) sind eigene Entwicklungen, oder auf dem Markt befindliche Anlagekörperteile, welche verschraubt und verschweisst eingebaut werden.

10.

Technische Krafterregeranlage nach Patentanspruch 9 Die Bestückung und Formgebung der Anlage wird nach Kraftbedarf und Platzbedürfnissen frei gestaltet und angeordnet, einzeln und typenweise in Serien hergestellt, wie z.B. Fig. 1-4

Niklaus Birrer.

Niklaus Bittel.

Blatt 1.

Fig. 1.

Fig. 2.

1/2

0040304

Niklaus Birrer.

Fig. 3.

1'
1'
1'
1a
4.
4,a
1,a
11.
5
6'
A'
2'
A'
B'
2'
8.
B'
B.
3, a.
9.
10.
7.
4,b
4,b

Blatt 2.

Fig. 4.

1'
1'
1a
4.
4,a
1,a
11.
4.
4.
9'
6'
4'
A'
B'
8.
3 a.
10.
9.
7.
4.
5'
4.
4.
4.
4,b.

2/2

0040304